# EUROPEAN PATENT APPLICATION

(11) **EP 0 955 190 A1**
(43) Date of publication of application: **10.11.1999**
(21) Application number: 99830215.2
(22) Date of filing: 15.04.1999
(51) Int. Cl.: B60H 3/06, B60H 1/00

(54) **A ventilation assembly for vehicles, including an interchangeable filter**

(30) Priority: 06.05.1998 IT TO980382
(71) Applicant: MAGNETI MARELLI CLIMATIZZAZIONE S.p.A., 10046 Poirino (Torino) (IT)
(72) Inventor: Carena, Bartolomeo, Frazione Masio, 24, 10046 Poirino (TO) (IT)
(74) Representative: Marchitelli, Mauro

(57) **Abstract**

A ventilation assembly for vehicles, comprising a casing (12) defining a chamber (16) having at least an inlet aperture and at least an outlet duct for an air flow. A filter (18) for filtering the air flow directed towards the outlet duct (38) is housed in the chamber (16). The casing has a removable section (14) carrying an electric fan assembly and a respective wall for conveying the air flow. The removable section is arranged so as to permit the removal of the filter (18) from the chamber (16) after separating the removal section (14) from the remaining part of the casing.

## Description

The present invention relates to a ventilation assembly for vehicles, of the type comprising a casing defining a chamber having at least an inlet aperture and an outlet duct for an air flow, wherein in the chamber is housed a filter which divides the chamber in an upstream section and a downstream section, with reference to the direction of the air flow, and wherein in the downstream section an electric fan assembly is housed, which is adapted to convey an air flow towards the outlet duct.

In ventilation assemblies of this type there is the problem of filter replacement which must be carried out once or twice a year.

In the more traditional solutions, the air filter of the ventilation assembly is mounted outside of the passenger compartment, in correspondence with the vehicle outer air intake. In this case, for replacing the filter it is necessary to remove the intake protection grill for removing the filter from above. These operations are often full of difficulties.

US patent No. 5062353 shows a solution wherein the ventilation assembly is arranged in the vehicle dashboard, in a position directly in front of the passenger seat. The filter of the ventilation assembly is arranged immediately behind a glow compartment formed in the dashboard and can be removed and inserted through the glow compartment.

The present invention has the object to provide a simple and effective solution for replacing the filter which permits to avoid that the dirty filter is removed through the glow compartment.

According to the present invention, this object is achieved by a ventilation assembly having the features forming the subject of the main claim.

In the solution according to the invention, the casing of the ventilation assembly has a removable section carrying the electric fan assembly and the respective walls for conveying the air flow. The removable section is arranged so as to permit removal of the filter after separating the removable section from the remaining part of the casing.

The ventilation assembly according to the present invention can be arranged in a vehicle dashboard, in front of the passenger seat, whereby the removable section can be dismounted by acting below the part of the dashboard placed in front of the passenger seat. Preferably the removable section is connected to the remaining part of the casing by a bayonet-type joint so that it can be mounted and dismounted without the need for tools.

Further characteristics and advantages of the present invention will become clear in the course of the detailed description which follows, given purely by way of non-limiting example, with reference to the annexed drawings, in which:

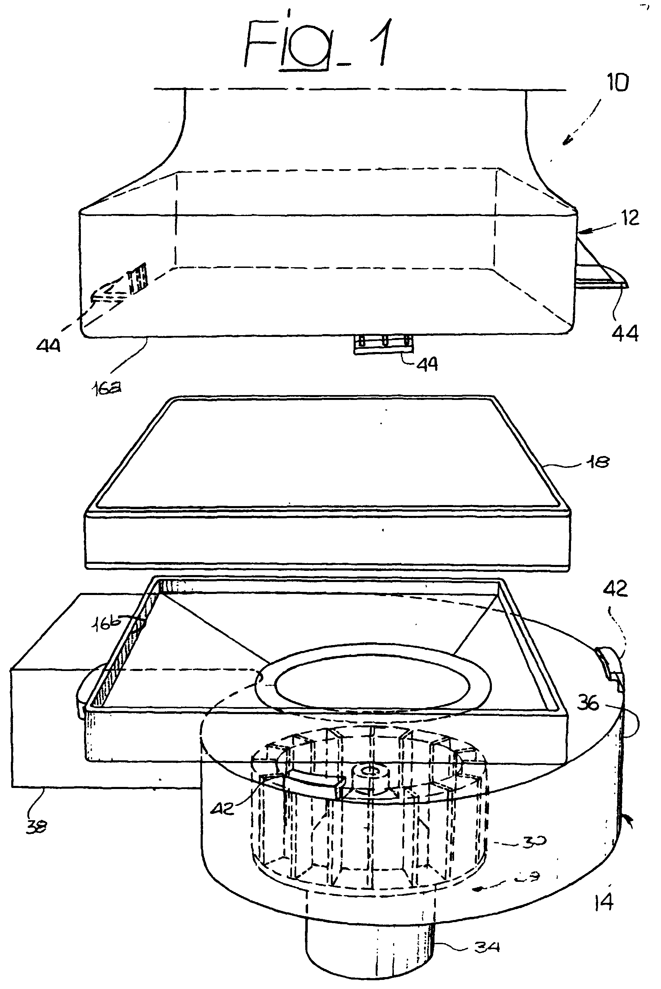

- figure 1 is a schematic and partial perspective view of a ventilation assembly according to the present invention,
- figure 2 is a front cross-section of the ventilation assembly of figure 1, and
- figures 3 and 4 are section taken on the lines III-III and IV-IV of figure 2.

With reference to the drawings, 10 indicates a ventilation assembly for vehicles, comprising a casing of plastics material 12 including a removable section 14. The casing 12 defines a chamber 16 in which a filter 18 is housed. The filter 18 divides the chamber 16 in an upper section 16a and a lower section 16b. The upper section 16a is connected to the outside of the passenger compartment through an aperture 20 in correspondence of which is placed a controllable valve 22. The upper part 16a can also be provided with an aperture 24 for a recycling air flow, in correspondence of which is placed a controllable valve 26. When valve 22 is shut and valve 26 is open, the air flow which enters into the chamber 16 comes entirely from the interior of the passenger compartment. Conversely, when valve 22 is open and valve 26 is shut, the air flow which enters the chamber 16 comes from the outside of the passenger compartment, through an air intake normally arranged at the basis of the front windshield.

The removable section 14 forms the casing of an electric fan assembly 28 having a centrifugal fan 30 mounted with its own axis of rotation perpendicular to the filter 18. The removable section 14 has a seat 32 in which the electric motor 34 is inserted and has a scroll-shaped wall 36 which forms the stator of a centrifugal fan. The curved wall 36 is shaped so as to convey the air flow produced by the fan 30 in a outlet duct 38 connected with the channels for distributing the air flow provided in the vehicle dashboard (not shown).

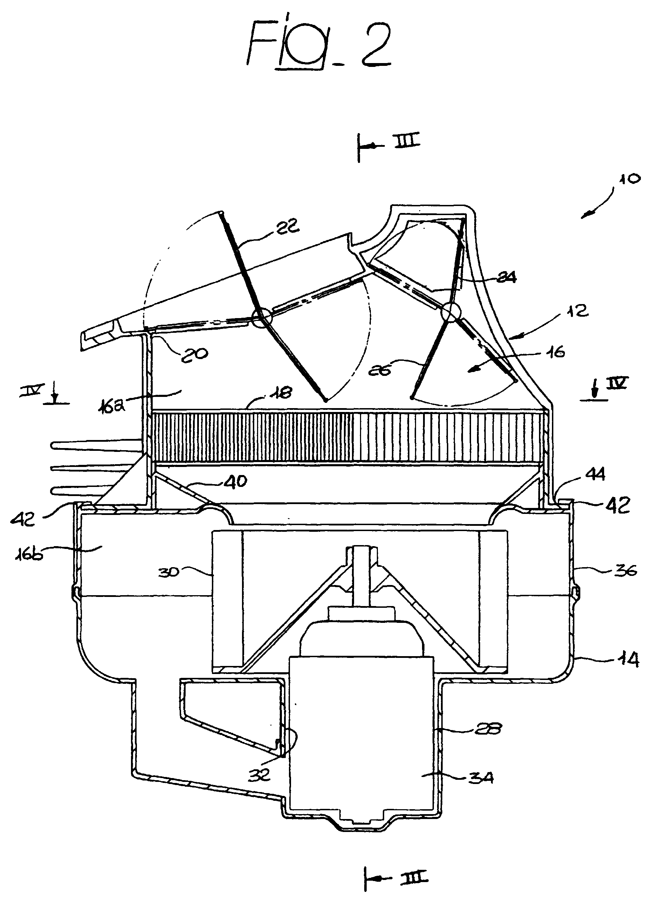

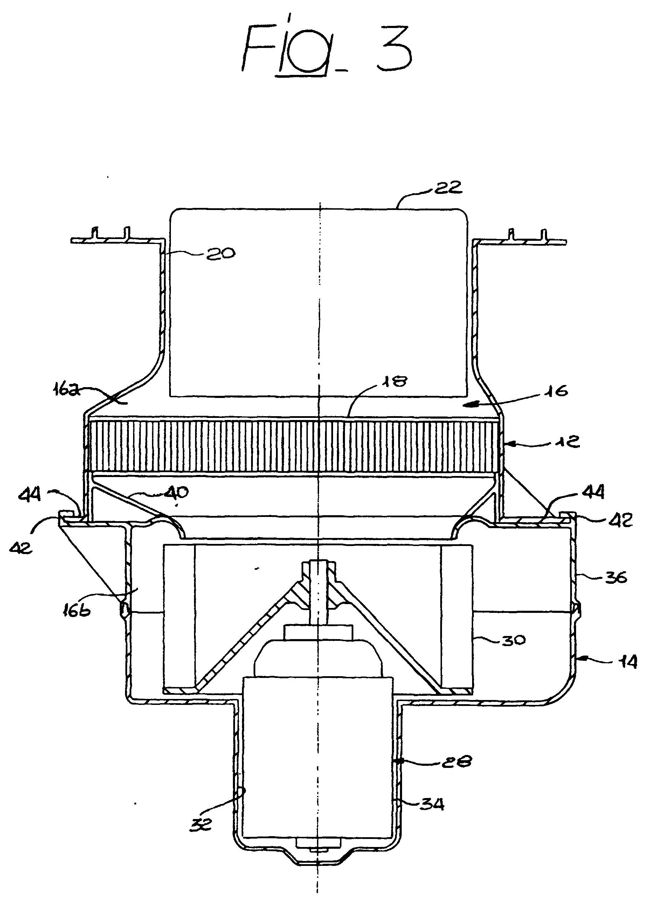

In the assembled condition, the removable section 14 is fixed to the upper part of the casing and maintains in position the filter 18 by means of perimetral support ribs 40 (figures 2 and 3). The lower section 14 can be removed and detached from the remaining part of the casing for the removal of filter 18 from the upper section 16a of the chamber, for its replacement by a new filter. The connection of the removable section 14 to the remaining part of the casing 12 can be carried out in any known way. In the example shown in the figures, such connection is effected by a series of engagement formations 42 formed on the upper edge of the lower section 14 and adapted to engage with a bayonet movement corresponding check projections 44 formed on the casing upper section 12.

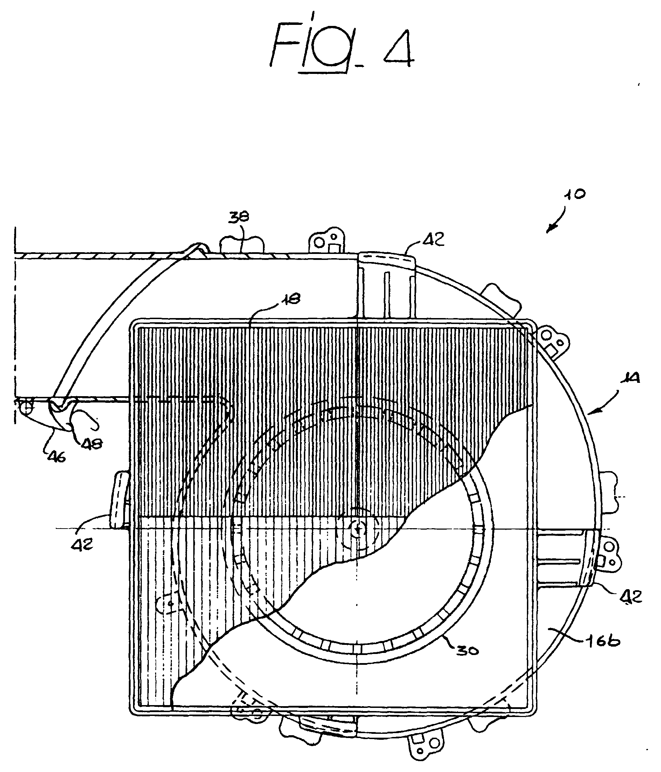

The ventilation assembly 10 is arranged inside the vehicle passenger compartment and is housed behind the wall of the dashboard which is immediately in front of the passenger seat. The removal of the lower section 14 is therefore carried out from below the dashboard, on the passenger side. In the configuration assembled on the vehicle, the axis of rotation of the fan 30 is substantially vertical and the filter 18 extends in a substantially horizontal direction. Therefore, after removal of the lower section 14, the filter 18 falls spontaneously on the vehicle floor and the filtered impurities do not soil other parts of the vehicle. As shown in figure 4, the ventilation assembly 10 can be provided with at least a deformable resilient leaf 46 adapted to snap engage a projection 48 fast with the lower section 14 in order to lock in a closed position the removable section 14. Therefore, for replacing the filter 18 it is sufficient to release the resilient leaf 46 and rotate the removable section 14 so as to free from each other the engagement formations 42 and 44. After having removed the used filter 18, a new filter is inserted in the upper section 14; the removable section is then positioned and locked by a rotation in the opposite direction. Mounting is completed by engaging again the resilient leaf 46.

## Claims

1. A ventilation assembly for vehicles, comprising a casing (12) defining a chamber (16) having at least an inlet aperture (20, 24) and at least an outlet duct (38) for an air flow, wherein a filter (18) is housed in the chamber (16) and divides the chamber into an upstream section (16a) and a downstream (16b) with reference to the direction of the air flow, and wherein in the downstream section (16b) is housed an electric fan assembly (28) for conveying the air flow towards said outlet duct (38), characterized in that said casing has a removable section (14) carrying the electric fan assembly (28) and a respective wall for conveying the air flow (36), the removable section (14) being arranged so as to permit removal of the filter (18) from said chamber (16) after separating the removable section (14) from the remaining part of the casing (12).

2. A ventilation assembly according to claim 1, characterized in that the removable section (14) and the remaining part (12) of the casing are provided with respective mutually cooperating engagement formation (42, 44) which form a bayonet-type joint.

3. A ventilation assembly according to claim 1, characterized in that the upstream section (16a) of said camber (16) has an aperture (20) connected to an outside intake and an aperture (24) connected to a recycling duct which draws air form the passenger compartment.
